# EUROPEAN PATENT APPLICATION

(11) **EP 3 623 434 A1**
(43) Date of publication of application: **18.03.2020**
(21) Application number: 18798530.4
(22) Date of filing: 10.05.2018
(51) Int. Cl.: C09D 133/14, B05D 1/36, B05D 7/24, C09D 5/00, C09D 7/48, C09D 135/00, C09D 167/00

(54) **CLEAR-COAT COATING MATERIAL COMPOSITION AND MULTILAYER COATING FILM FORMATION METHOD**

(30) Priority: 11.05.2017 JP 2017094830
(71) Applicant: Kansai Paint Co., Ltd, Amagasaki-shi, Hyogo 661-8555 (JP)
(72) Inventor: NAKABAYASHI, Takuya, Hiratsuka-shi Kanagawa 254-8562 (JP)
(74) Representative: Müller-Boré & Partner Patentanwälte PartG mbB
(86) International application number: PCT/JP2018/018210
(87) International publication number: WO 2018/207892

(57) **Abstract**

The clear coat paint composition comprises (A) a carboxy-containing polymer, (B) an epoxy-containing acrylic resin, and (C) an antioxidant having a phenyl group and a sulfide bond.

## Description

### Technical Field

The present invention relates to a clear coat paint composition, and a method for forming a multilayer coating film.

### Background Art

In the past, acrylic melamine organic solvent-based paints have been widely used on the outer panel surface of vehicle bodies. However, these low-solids paints contain a large amount of organic solvent. Paints called high-solids paints, which have a solvent content of not more than 50% by mass, have been increasingly used as environment-friendly paints.

Among these, as topcoats for vehicles, there have been proposed various crosslinked paints that have an ester bond formed by a reaction between an epoxy group and an acid group, such as a carboxy group. However, as compared with conventional melamine-based paints, such acid-epoxy curable paints have a problem in that significant yellowing occurs in the clear coating film when it is cured by heating.

Patent Literature (PTL) 1 discloses a low-solvent paint comprising at least a polymer having two or more epoxy groups, on average, per molecule (a); a curing agent (b); and an organic solvent (c), the curing agent (b) being an aliphatic tricarboxylic acid. However, the acid disclosed in Patent Literature (PTL) 1 is not a polymer, but an aliphatic tricarboxylic acid. The low-solvent paint disclosed in PTL 1 may contain an antioxidant. PTL 1 discloses that the use of Irganox 1010 as an antioxidant can significantly improve yellowing of the coating film that would occur due to heat at the time of bake-curing (paragraph [0063]; and Table 10 in paragraph [0076]).

Patent Literature 2 (PTL 2) discloses a high-solids-content curable resin composition comprising
(a) 10 to 70 wt.% of an acrylic polycarboxylic acid having 2 or more carboxy groups, on average, per molecule, an acid value of 5 to 300 mg KOH/g solids, and a number average molecular weight of 500 to 8000;
(b) 10 to 80 wt.% of a polyepoxide having an epoxy equivalent of 50 to 700, and a number average molecular weight of 200 to 10000; and
(c) 0.1 to 10 wt.% of an antioxidant.
The antioxidant (c) is one, or two or more antioxidants selected from phenolic antioxidants, phosphite antioxidants, and thioether antioxidants. PTL 2 discloses that when several antioxidants, such as Sumilizer BHT, are used, the color difference between the coating film of the clear paint and a white plate is reduced (Table 3 in paragraph [0168]; and Table 4 in paragraph [0169]).

### Citation List

### Patent Literature

PTL 1: JP2004-346294A
PTL 2: JPH9-104803A

### Summary of Invention

### Technical Problem

PTL 1 discloses improvement in yellowing of a coating film of a low-solvent-content paint that occurs during bake-curing. However, when the cured coating film was left outdoors for several days, the color of the coating film was subject to change. In this case, since the color of the coating film cannot be inspected until color change of the coating film subsides, there is a long period of time from baking of the coating film until shipment, and the production line efficiency is problematically reduced. Furthermore, excellent acid resistance, smoothness, gloss, and waterproof adhesion are desired in paints used for topcoats of vehicles. However, the low-solvent-content paint disclosed in PTL 1, which comprises aliphatic tricarboxylic acid as a curing agent (b), has poor waterproof adhesion.

PTL 2 also discloses the measurement of color difference between a clear coat paint composition that is bake-cured and a white plate. However, it nowhere discloses the color change of a cured coating film after being left outdoors for several days.

If there is a coating film that is less susceptible to color change even when left outdoors for several days after bake-curing, shipment can be made within a short period of time after bake-curing the coating film, becoming advantageous in terms of improving the production line efficiency.

An object of the present invention is to provide a clear coat paint composition that has excellent acid resistance, smoothness, and waterproof adhesion; and that is capable of forming a clear coat coating film whose color change over time after being left outdoors is significantly suppressed.

### Solution to Problem

The present inventors found that the above object can be achieved by incorporating an antioxidant having a phenyl group and a sulfide bond into a clear coat paint composition comprising (A) a carboxy-containing polymer and (B) an epoxy-containing acrylic resin. The present invention has been accomplished based on this finding.

The present invention includes the following items.
Item 1. A clear coat paint composition comprising
   (A) a carboxy-containing polymer,
   (B) an epoxy-containing acrylic resin, and
   (C) an antioxidant having a phenyl group and a sulfide bond.
Item 2. The clear coat paint composition according to Item 1, wherein the amount of the antioxidant having a phenyl group and a sulfide bond (C) is 0.1 to 10 parts by mass, per 100 parts by mass of the solids content of the clear coat paint composition .
Item 3. A method for forming a multilayer coating film, comprising the steps of:
   (1) applying an aqueous base coat paint composition (X) to a substrate to form a base coat coating film;
   (2) applying a clear coat paint composition (Y) to the uncured base coat coating surface to form a clear coat coating film; and
   (3) heating the uncured base coat coating film and the uncured clear coat coating film to simultaneously cure the films; wherein the aqueous base coat paint composition (X) contains an amine compound (x1), and the clear coat paint composition (Y) is the clear coat paint composition according to Item 1 or 2.
Item 4. The method for forming a multi-layer coating film according to Item 3, wherein the amine compound (x1) is a tertiary amine.

### Advantageous Effects of Invention

The clear coat paint composition of the present invention has excellent acid resistance, smoothness, gloss, and waterproof adhesion; and comprises an antioxidant that suppresses color change of the coating film over time after being left outdoors. The coating film formed using the clear coat paint composition has excellent acid resistance, smoothness, gloss, and waterproof adhesion; and color change of the coating film over time after being left outdoors is significantly suppressed. Therefore, after a substrate of a vehicle or the like on which this multilayer coating film has been formed is baked, shipment can be promptly made in a short period of time, thus improving the production line efficiency.

### Description of Embodiments

The clear coat paint composition and the method for forming a multilayer coating film according to the present invention are described in detail below.

### Clear Coat Paint Composition

The clear coat paint composition of the present invention contains (A) a carboxy-containing polymer, (B) an epoxy-containing acrylic resin, and (C) an antioxidant having a phenyl group and a sulfide bond.

### Carboxy-Containing Polymer (A)

Examples of the carboxy-containing polymer (A) include known carboxy-containing polymers. Preferable examples of the carboxy-containing polymer (A) include a vinyl polymer having a half-esterified acid anhydride group (A-1), and a carboxy-containing polyester polymer (A-2).

### Vinyl Polymer Having a Half-esterified Acid Anhydride Group (A-1)

The term "half-esterified acid anhydride group" as used herein means a group comprising carboxy and carboxy ester groups that is obtained by adding an aliphatic monohydric alcohol to an acid anhydride group to perform ring opening (i.e., half-esterification). This group is hereinafter sometimes simply referred to as a "half-ester group."

The polymer (A-1) can be easily obtained by, for example, copolymerizing a half-ester group-containing vinyl monomer with other vinyl monomers by a standard method. The polymer (A-1) can also be easily obtained by performing copolymerization in a similar manner using an acid anhydride group-containing vinyl monomer in place of the half-ester group-containing vinyl monomer, and then half-esterifying the acid anhydrous group. The polymer (A-1) can also be obtained by performing copolymerization in a similar manner using a hydroxy-containing vinyl monomer in place of the half-ester group-containing vinyl monomer, and then half-esterifying the hydroxy group.

Examples of the half-ester group-containing vinyl monomer include compounds obtained by half-esterifying acid anhydride groups of acid anhydride group-containing vinyl monomers; compounds obtained by adding acid anhydrides to hydroxy-containing vinyl monomers by half-esterification; and the like.

Specific examples of compounds obtained by half-esterifying acid anhydride groups of acid anhydride group-containing vinyl monomers include monoesters of vinyl monomers having an acid anhydride group, such as maleic anhydride and itaconic anhydride, with aliphatic monoalcohols; and the like.

Specific examples of compounds obtained by adding acid anhydrides to hydroxy-containing vinyl monomers by half-esterification include compounds obtained by adding, by half-esterification, acid anhydrides, such as phthalic anhydride and hexahydrophthalic anhydride, to hydroxy-containing vinyl monomers mentioned below as examples of other vinyl monomers.

As described above, the half-esterification can be performed either before or after the copolymerization reaction. Examples of aliphatic monohydric alcohols that can be used for the half-esterification include low-molecular-weight monohydric alcohols, such as methanol, ethanol, isopropanol, tert-butanol, isobutanol, ethylene glycol monomethyl ether, and ethylene glycol monoethyl ether. The half-esterification reaction can be carried out by a usual method, at room temperature to about 80°C, using, if necessary, a tertiary amine as a catalyst. In this specification, room temperature refers to 20°C.

Examples of other vinyl monomers described above include hydroxy-containing vinyl monomers; (meth)acrylic acid esters; vinyl ethers and allyl ethers; olefinic compounds and diene compounds; nitrogen-containing unsaturated monomers; styrene, α-methylstyrene, vinyltoluene, and the like.

Examples of hydroxy-containing vinyl monomers include C₂-C₈ hydroxyalkyl esters of acrylic or methacrylic acid, such as 2-hydroxyethyl (meth)acrylate, 3-hydroxypropyl (meth)acrylate, and 4-hydroxybutyl (meth)acrylate; monoesters of polyether polyols, such as polyethylene glycol, polypropylene glycol, and polybutylene glycol, with unsaturated carboxylic acids, such as (meth)acrylic acid; monoethers of polyether polyols, such as polyethylene glycol, polypropylene glycol, and polybutylene glycol, with hydroxy-containing unsaturated monomers, such as 2-hydroxyethyl (meth)acrylate; diesters of acid anhydride group-containing unsaturated compounds, such as maleic anhydride and itaconic anhydride, with glycols, such as ethylene glycol, 1,6-hexanediol, and neopentyl glycol; hydroxyalkyl vinyl ethers, such as hydroxyethyl vinyl ether; allyl alcohol, and the like; 2-hydroxypropyl (meth)acrylate; adducts of α,β-unsaturated carboxylic acids with monoepoxy compounds, such as "Cardura E10P" (tradename; produced by Momentive Specialty Chemicals Inc.) and α -olefin epoxide; adducts of glycidyl (meth)acrylate with monobasic acids, such as acetic acid, propionic acid, p-tert-butylbenzoic acid, and aliphatic acids; adducts of the above hydroxy-containing monomers with lactones (e.g., ε-caprolactone, γ-valerolactone): and the like.

In this specification, "(meth)acrylate" means "acrylate or methacrylate"; "(meth)acrylic acid" means "acrylic acid or methacrylic acid"; and "(meth)acrylamide" means "acrylamide or methacrylamide."

Examples of (meth)acrylic acid esters include C₁-C₂₄ alkyl esters or cycloalkyl esters of acrylic or methacrylic acid, such as methyl acrylate, ethyl acrylate, propyl acrylate, isopropyl acrylate, n-butyl acrylate, isobutyl acrylate, tert-butyl acrylate, hexyl acrylate, 2-ethylhexyl acrylate, n-octyl acrylate, decyl acrylate, stearyl acrylate, lauryl acrylate, cyclohexyl acrylate, methyl methacrylate, ethyl methacrylate, n-propyl methacrylate, isopropyl methacrylate, n-butyl methacrylate, isobutyl methacrylate, tert-butyl methacrylate, hexyl methacrylate, 2-ethylhexyl methacrylate, octyl methacrylate, decyl methacrylate, lauryl methacrylate, and stearyl methacrylate; C₂-C₁₈ alkoxyalkyl esters of acrylic or methacrylic acid, such as methoxybutyl acrylate, methoxybutyl methacrylate, methoxyethyl acrylate, methoxyethyl methacrylate, ethoxybutyl acrylate, and ethoxybutyl methacrylate; and the like.

Examples of vinyl ethers and allyl ethers include linear or branched alkyl vinyl ethers, such as ethyl vinyl ether, n-propyl vinyl ether, isopropyl vinyl ether, n-butyl vinyl ether, tert-butyl vinyl ether, pentyl vinyl ether, hexyl vinyl ether, and octyl vinyl ether; cycloalkyl vinyl ethers, such as cyclopentyl vinyl ether and cyclohexyl vinyl ether; allyl vinyl ethers, such as phenyl vinyl ether and trivinyl ether; aralkyl vinyl ethers, such as benzyl vinyl ether and phenethyl vinyl ether; allyl ethers, such as allyl glycidyl ether and allyl ethyl ether; and the like.

Examples of olefin compounds and diene compounds include ethylene, propylene, butylene, vinyl chloride, butadiene, isoprene, chloroprene, and the like.

Examples of nitrogen-containing unsaturated monomers include nitrogen-containing alkyl (meth)acrylates, such as N,N-dimethylaminoethyl (meth)acrylate, N,N-diethylaminoethyl (meth)acrylate, and N-tert-butylaminoethyl (meth)acrylate; polymerizable amides, such as acrylamide, methacrylamide, N-methyl (meth)acrylamide, N-ethyl (meth)acrylamide, N,N-dimethyl (meth)acrylamide, N,N-dimethylaminopropyl (meth)acrylamide, and N,N-dimethylaminoethyl (meth)acrylamide; aromatic nitrogen-containing monomers, such as 2-vinylpyridine, 1-vinyl-2-pyrrolidone, and 4-vinylpyridine; polymerizable nitriles, such as acrylonitrile and methacrylonitrile; allylamines; and the like.

A mixture of the various monomers mentioned above can be copolymerized by a generally employed method for copolymerizing vinyl monomers. In consideration of versatility and cost, a method of solution radical polymerization in an organic solvent is preferable. When the solution radical polymerization method is used, a desired copolymer can be easily obtained by performing a copolymerization reaction of a monomer mixture at about 60 to 165°C in an organic solvent in the presence of a polymerization initiator. Examples of the organic solvent include aromatic hydrocarbon solvents, such as xylene and toluene; ketone solvents, such as methyl ethyl ketone and methyl isobutyl ketone; ester solvents, such as ethyl acetate, butyl acetate, isobutyl acetate, and 3-methoxybutyl acetate; alcohol solvents, such as n-butanol and isopropyl alcohol; and the like. Examples of the polymerization initiator include azobisisobutyronitrile, benzoyl peroxide, and the like.

The suitable proportions of the half-ester group- or acid anhydride group-containing vinyl monomer and other vinyl monomers used in the copolymerization, relative to the total amount of monomers used, are usually as follows: from the viewpoint of the balance between the curing reactivity of the resulting copolymer and the storage stability, the proportion of the half-ester group- or acid anhydride group-containing vinyl monomer is preferably about 5 to 40 mass%, and more preferably about 10 to 30 mass%. The proportion of other vinyl monomers is preferably about 60 to 95 mass%, and more preferably about 70 to 90 mass%. When an acid anhydride group-containing vinyl monomer is used, a half-esterification reaction is performed after the copolymerization reaction, as described above.

The vinyl polymer having a half-esterified acid anhydride group (A-1) is preferably an acrylic polymer that has a number average molecular weight of about 1,000 to 10,000, and more preferably about 1,200 to 7,000; and preferably has an acid value of about 50 to 250 mg KOH/g, and more preferably about 100 to 200 mg KOH/g, from the viewpoint of excellent compatibility with the epoxy-containing acrylic resin (B), and excellent acid resistance, glossof the obtained coating film of the paint composition comprising the this component (A-1).

### Carboxy-Containing Polyester Polymer (A-2)

The carboxy-containing polyester polymer can be easily obtained by a condensation reaction of a polyhydric alcohol with a polycarboxylic acid. For example, the carboxy-containing polyester polymer can be obtained by a one-step reaction under such conditions that carboxy groups of the polycarboxylic acid are present in excess. Alternately, the carboxy-containing polyester polymer can be obtained by first synthesizing a hydroxy-terminated polyester polymer under such conditions that hydroxy groups of the polyhydric alcohol are present in excess, and then adding an acid anhydride-containing compound.

Examples of the polyhydric alcohol include ethylene glycol, butylene glycol, 1,6-hexanediol, 2-butyl-2-ethyl-1,3-propanediol, 3-methyl-1,5-pentanediol, trimethylolpropane, pentaerythritol, and the like. Examples of polycarboxylic acids include adipic acid, terephthalic acid, isophthalic acid, phthalic anhydride, hexahydrophthalic anhydride, and the like. Examples of acid anhydride group-containing compounds include phthalic anhydride, hexahydrophthalic anhydride, succinic anhydride, and the like.

The number average molecular weight of the carboxy-containing polyester polymer (A-2) is not particularly limited, but is preferably about 500 to 10000, particularly about 800 to 5000, from the viewpoint of excellent acid resistance and gloss of the obtained coating film of the paint composition containing this component.

To improve the compatibility of the carboxy-containing polyester polymer (A-2) with the epoxy-containing acrylic resin (B), and to enhance the adhesion of the coating film of the paint composition containing this component, hydroxy groups can be introduced to such an extent that the acrylic resin has a hydroxy value of about 100 mg KOH/g or less. For example, under conditions in which carboxy groups are present in excess, hydroxy groups can be introduced by terminating the condensation reaction during the course of the reaction. Under conditions in which hydroxy groups are present in excess, hydroxy groups can be easily introduced by synthesizing a hydroxy-terminated polyester polymer, and then adding an acid anhydride group-containing compound so that the amount of acid groups is smaller than that of hydroxy groups.

Particularly preferable examples of the carboxy-containing polyester polymer include the following carboxy-containing, high-acid-value polyesters. The high-acid-value polymers as used herein usually mean polymers with an acid value of more than 70 mg KOH/g.

The carboxy-containing, high-acid-value polyester can be easily obtained by performing an esterification reaction of a polyhydric alcohol with a polycarboxylic acid or a lower alkyl ester thereof, under such conditions that the amount of hydroxy groups is in excess of the amount of carboxy groups, to obtain a polyester polyol; and then subjecting the polyester polyol to a half-esterification reaction with an acid anhydride group-containing compound. The carboxy group herein includes acid anhydride groups. When the amount of carboxy groups is calculated, 1 mole of acid anhydride groups is counted as 2 moles of carboxy groups. The esterification reaction may be either a condensation reaction, or a transesterification reaction.

The above polyester polyol can be obtained under usual esterification reaction conditions. The polyester polyol preferably has a number average molecular weight of about 350 to 4,700, and particularly preferably about 400 to 3,000; and preferably has a hydroxy value of about 70 to 400 mg KOH/g, and particularly preferably about 150 to 350 mg KOH/g. The half-esterification reaction of the polyester polyol can be performed by a usual method, usually at a temperature between room temperature to about 80°C, using, if necessary, a basic catalyst, such as a tertiary amine.

Examples of the polyhydric alcohols include ethylene glycol, butylene glycol, 1,6-hexanediol, trimethylolpropane, pentaerythritol, and the like. Examples of polycarboxylic acids include adipic acid, sebacic acid, terephthalic acid, isophthalic acid, phthalic anhydride, hexahydrophthalic anhydride, trimellitic anhydride, and the like. Examples of acid anhydride group-containing compounds include phthalic anhydride, hexahydrophthalic anhydride, succinic anhydride, trimellitic anhydride, and the like.

The carboxy-containing, high-acid-value polyester preferably has a number average molecular weight of about 800 to 5,000, and particularly preferably about 900 to 4,000; and preferably has an acid value of about 80 to 300 mg KOH/g, and particularly preferably about 100 to 250 mg KOH/g. When the carboxy-containing polymer (A) comprises a vinyl polymer having a half-esterified acid anhydride group (A-1) and a carboxy-containing polyester polymer (A-2), the ratio of the vinyl polymer having a half-esterified acid anhydride group (A-1) to the carboxy-containing polyester polymer (A-2) is not particularly limited, but is preferably in the range of 99:1 to 1:99, more preferably 97:3 to 50:50, and still more preferably 95:5 to 60:40.

### Epoxy-Containing Acryl Resin (B)

The epoxy-containing acrylic resin (B) functions as a crosslinking-curing agent for the carboxy-containing polymer (A).

The epoxy-containing acrylic resin (B) may contain, in addition to an epoxy group, an alkoxysilyl group. When the epoxy-containing acrylic resin (B) contains an alkoxysilyl group, the coating film of the composition containing the epoxy-containing acrylic resin (B) has a higher crosslinking density, and has improved scratch resistance and stain resistance.

The acrylic resin (B) can be synthesized by copolymerizing an epoxy-containing vinyl monomer with other vinyl monomers; or copolymerizing an epoxy-containing vinyl monomer, an alkoxysilyl-containing vinyl monomer, and one or more other vinyl monomers.

Examples of epoxy-containing vinyl monomers include glycidyl (meth)acrylate, allyl glycidyl ether, 3,4-epoxycyclohexylmethyl (meth)acrylate, and the like.

Examples of alkoxysilyl-containing vinyl monomers include vinyltrimethoxysilane, vinylmethyldimethoxysilane, vinyltriethoxysilane, vinylmethyldiethoxysilane, vinyltris(2-methoxyethoxy)silane, γ-(meth)acryloyloxypropyltrimethoxysilane, γ-(meth)acryloyloxypropylmethyldimethoxysilane, vinyltriacetoxysilane, β-(meth)acryloyloxyethyltrimethoxysilane, γ-(meth)acryloyloxypropyltriethoxysilane, γ-(meth)acryloyloxypropylmethyldiethoxysilane, and the like. Among these, to obtain excellent low-temperature curability and excellent storage stability, alkoxysilyl-containing vinyl monomers in which the alkoxysilyl groups are ethoxysilyl groups are preferable; examples thereof include vinyltriethoxysilane, vinylmethyldiethoxysilane, γ-(meth)acryloyloxypropyltriethoxysilane, γ-(meth)acryloyloxypropylmethyldiethoxysilane, and the like.

Examples of other vinyl monomers are the same as those mentioned in the description of the polymer (A-1).

As the copolymerization method for producing the epoxy-containing acrylic resin (B), the same copolymerization method as mentioned in the description of the polymer (A-1) can be used.

To improve the compatibility of the epoxy-containing acrylic resin (B) with the carboxy-containing polymer (A) and to enhance adhesion of the coating film of a paint composition containing the epoxy-containing acrylic resin (B), hydroxy groups can be introduced into the acrylic resin (B) to such an extent that the acrylic resin has a hydroxy value of about 150 mg KOH/g or less.

Hydroxy groups can be introduced by performing copolymerization using a hydroxy-containing vinyl monomer as a comonomer component. Examples of usable hydroxy-containing vinyl monomers are the same as those mentioned above in the description of the polymer (A-1).

When the epoxy-containing vinyl monomer and other vinyl monomers are copolymerized, the amount of the epoxy-containing vinyl monomer is preferably about 5 to 80 mass%, and more preferably about 10 to 65 mass%, from the viewpoint of the balance between the curing reactivity of the obtained copolymer and storage stability. The proportion of other vinyl monomers is preferably about 20 to 95 mass%, and more preferably about 35 to 90 mass%.

When the epoxy-containing vinyl monomer, alkoxysilyl-containing vinyl monomer, and other monomers are copolymerized, it is usually preferable to use the monomers in the following proportions, relative to the total amount of the monomers used: the proportion of the epoxy-containing vinyl monomer is preferably about 5 to 60 mass%, and particularly preferably about 10 to 40 mass%, from the viewpoint of the balance between the curing reactivity of the obtained copolymer and the storage stability; the proportion of the alkoxysilyl-containing vinyl monomer is preferably about 3 to 40 mass%, and particularly preferably about 5 to 30 mass%, in view of excellent curing reactivity of the obtained copolymer, and excellent scratch resistance of the coating film of the paint composition containing this component; and the proportion of other vinyl monomers is preferably about 10 to 80 mass%, and more preferably about 20 to 50 mass%.

The epoxy content of the acrylic resin (B) is preferably about 0.5 to 5.5 mmol/g, and more preferably about 0.8 to 4.5 mmol/g, in view of excellent compatibility of the acrylic resin (B) with the carboxy-containing polymer (A), and excellent curability of the resulting paint composition, and excellent acid resistance of the obtained coating film.

The acrylic resin (B) preferably has a number average molecular weight of about 1,000 to 10,000, and more preferably about 1,200 to 7,000, in view of excellent compatibility with the carboxy-containing polymer (A), and excellent acid resistance of the obtained coating film.

In view of excellent curability of the paint composition, the proportions of the carboxy-containing polymer (A) and epoxy-containing acrylic resin (B) in the paint composition of the present invention are preferably such that the equivalent ratio of carboxy groups in the component (A) to epoxy groups in the component (B) is in the range of about 1:0.5 to 0.5:1, and more preferably about 1:0.6 to 0.6:1.

In view of excellent acid resistance and waterproof adhesion of the coating film, the proportions of the carboxy-containing polymer (A) and the epoxy group-containing acrylic resin (B), on a solids basis, are preferably such that based on the total amount of the components (A) and (B), the component (A) is preferably in an amount of about 20 to 80% by mass, and more preferably about 35 to 65% by mass; and the component (B) is preferably in an amount of about 80 to 20% by mass, and more preferably about 65 to 35% by mass.

In view of excellent acid resistance of the obtained coating film, the proportion of the total amount of the carboxy-containing polymer (A) and the epoxy-containing acrylic resin (B) in the clear coat paint composition is preferably, on a solids basis, 70% by mass or more, more preferably 75 to 98% by mass, and particularly preferably 80 to 95% by mass. When the clear coat paint composition contains, as at least one of the carboxy-containing polymers (A), the above-mentioned vinyl polymer having a half-esterified acid anhydride group (A-1), the total amount of the vinyl polymer having a half-esterified acid anhydride group (A-1) and the epoxy-containing acrylic resin (B) in the clear coat composition is preferably 70% by mass or more, preferably 72 to 98% by mass, and more preferably 75 to 95% by mass, on a solids basis, from the viewpoint of excellent acid resistance of the resulting coating film.

### Antioxidant Having a Phenyl Group and a Sulfide bond (C)

The antioxidant having a phenyl group and a sulfide bond used in the present invention functions to suppress color change of a coating film over time due to UV exposure after applying the clear coat paint composition of the present invention to a substrate, and bake-curing the coating film. Specifically, color change of the clear coat paint composition containing an antioxidant having a phenyl group and a sulfide bond (C) is suppressed even after the composition is left outdoors for a certain period of time, as compared with the color immediately after curing.

As the antioxidant having a phenyl group and a sulfide bond (C), any wide variety of known antioxidants that have a phenyl group and a sulfide bond can be used. Specific examples of the antioxidant having a phenyl group and a sulfide bond (C) include 4-[[4,6-bis(octylthio)-1,3,5-triazin-2-yl]amino]-2,6-di-tert-butylphenol (Irganox 565), 2,2'-thiodiethylbis[3-(3,5-di-tert-butyl-4-hydroxyphenyl)propionate] (registered trademark: Irganox 1035), 2,4-bis(octylthiomethyl)-6-methylphenol (registered trademark: Irganox 1520L), 2,4-bis(dodecylthiomethyl)-6-methylphenol (registered trademark: Irganox 1726); and the like. All of these from the Irganox (registered trademark) series are available from BASF Japan, Ltd. These antioxidants can be used singly, or in a combination of two or more.

From the viewpoint of suppressing color change over time of a multilayer coating film that is left outdoors, the amount of antioxidant (C) is preferably 0.1 parts by mass or more, per 100 parts by mass of the solids content of the clear coat paint composition. From the viewpoint of preventing a decrease in curability of a coating film formed of the clear coat paint composition and a multilayer coating film comprising the coating film, the amount of antioxidant (C) is preferably 10 parts by mass or less, and more preferably 3 parts by mass or less.

The amount of antioxidant (C) is preferably in the range of 0.1 to 10 parts by mass, more preferably 0.3 to 5 parts by mass, and still more preferably 0.5 to 3 parts by mass, per 100 parts by mass of the solids content of the clear coat paint composition.

### Other Components

The clear coat paint composition of the present invention may contain a curing catalyst, if necessary. Examples of curing catalysts include those that are effective for the crosslinking reaction of carboxy groups and epoxy groups, such as tetraethylammonium bromide, tetrabutylammonium bromide, tetraethylammonium chloride, tetrabutylphosphonium bromide, triphenylbenzylphosphonium chloride, and like quaternary salt catalysts; triethylamine, tributylamine, and like amines. Among these, quaternary salt catalysts are preferable. A mixture of substantially equivalent amounts of a quaternary salt and a phosphoric acid compound, such as monobutyl phosphate or dibutyl phosphate, is particularly preferable, because such a mixture can improve the storage stability of the paint composition and prevent the decrease of spray coating suitability caused by a reduction of electric resistance of the paint composition, while retaining the catalytic action.

If necessary, the clear coat paint composition may contain a dehydrating agent, such as trimethyl orthoacetate, in order to suppress the deterioration of the paint caused by moisture that is present in the paint and in the air.

The clear coat paint composition may further contain known pigments, such as color pigments, extender pigments, effect pigments, and rust preventive pigments, if necessary.

Examples of color pigments include titanium oxide, zinc oxide, carbon black, cadmium red, molybdenum red, chromium yellow, chromium oxide, Prussian blue, cobalt blue, azo pigments, phthalocyanine pigments, quinacridone pigments, isoindoline pigments, threne pigments, perylene pigments, and the like. Examples of extender pigments include talc, clay, kaolin, barium oxide, barium sulfate, barium carbonate, calcium carbonate, silica, alumina white, and the like. Examples of effect pigments include aluminum powder, mica powder, titanium oxide-coated mica powder, and the like.

The clear coat paint composition may further contain, if necessary, various resins other than the carboxy-containing polymer (A) and epoxy-containing acrylic resin (B), such as acrylic resins, polyester resins, alkyd resins, and fluororesins. To enhance the curability, the composition may also contain a crosslinking agent, such as a melamine resin or a blocked polyisocyanate compound. Further, it is also possible to add commonly used additives for paints, such as UV absorbers, light stabilizers, antioxidants, surface adjusting agents, and anti-foaming agents, if necessary.

Examples of usable UV absorbers are known UV absorbers, such as benzotriazole UV absorbers, triazine UV absorbers, salicylic acid derivative UV absorbers, and benzophenone UV absorbers. Incorporating a UV absorber can improve, for example, weather resistance of the coating film, and suppression of color change of the coating film after long-term (e.g., 1 year or more) UV irradiation.

The amount of the UV absorber is usually 0 to 10 parts by mass, preferably 0.2 to 5 parts by mass, and more preferably 0.3 to 2 parts by mass, per 100 parts by mass of the total resin solids content of the paint.

Examples of light stabilizers include known light stabilizers, such as hindered amine light stabilizers. Using a light stabilizer can improve, for example, the weather resistance of the coating film, and suppression of color change of the coating film after long-term (e.g., 1 year or more) light irradiation.

The amount of the light stabilizer is usually 0 to 10 parts by mass, preferably 0.2 to 5 parts by mass, and more preferably 0.3 to 2 parts by mass, per 100 parts by mass of the total resin solids content of the paint.

The form of the clear coat paint composition is not particularly limited. In general, the composition is preferably used as an organic solvent-based paint composition. In such a case, usable organic solvents include various organic solvents for paints, such as aromatic or aliphatic hydrocarbon solvents; alcohol solvents; ester solvents; ketone solvents; and ether solvents. The organic solvent used for preparing the components (A), (B), and (C) may be used unmodified, or an organic solvent may be further added.

The clear coat paint composition of the present invention can be prepared by mixing, by a known method, the carboxy-containing polymer (A), the epoxy-containing acrylic resin (B), and the antioxidant (C), optionally with additives for paints, such as curing catalysts, dehydrating agents, pigments, various resins, UV absorbers, and light stabilizers; organic solvents, and the like. The solids content of the clear coat paint composition is generally 30 to about 70 mass%, and particularly preferably 40 to about 60 mass%.

### Multilayer Coating Film Formation Method

The paint composition of the present invention is preferably used as a clear coat paint composition that forms a clear coat coating film as the uppermost layer of the multilayer coating film in the multilayer coating film formation method in which a base coat coating film of one or two layers and a clear coat coating film of one or two layers are sequentially formed on a substrate.

The steps of the multilayer coating film formation method may be, for example, the following known steps.
Step A: 2-coat 1-bake method (application of aqueous base coat paint composition (X) → application of clear coat paint composition (Y) → baking).
Step B: 3-coat 1-bake method (application of aqueous base coat paint composition (X) → application of first clear coat paint composition → application of second clear coat paint composition (Y) → baking).
Step C: 3-coat 2-bake method (application of aqueous base coat paint composition (X) → application of first clear coat paint composition → baking → application of second clear coat paint composition (Y) → baking).
Step D: 3-coat 1-bake method (application of first aqueous base coat paint composition (X) → application of second aqueous base coat paint composition (X) → application of clear coat paint composition (Y) → baking).
Step E: 4-coat 2-bake method (application of first aqueous base coat paint composition (X) → application of first clear coat paint composition → baking → application of second aqueous base coat paint composition (X) → application of clear coat paint composition (Y) → baking).
   From the viewpoint of reducing the number of steps, the following step F of simultaneously curing the intermediate coating film and the top coat coating film can be used.
Step F: 3-coat 1-bake method (application of intermediate paint → application of aqueous base coat paint composition (X) → application of clear coat paint composition (Y) → baking).

The first aqueous base coat paint composition (X) and the second aqueous base coat paint composition (X) are the aqueous base coat paint compositions (X) described below. The formulation of the first aqueous base coat paint composition (X) and the second aqueous base coat paint composition (X) may be the same or different.

The aqueous base coat paint composition (X) and the clear coat paint composition (Y) can be applied to a substrate, for example, by air spray coating, airless spray coating, rotary atomization coating, or curtain coating. In air spray coating, airless spray coating, and rotary atomization coating, an electrostatic charge may be applied, if necessary. Among these, air spray coating and rotary atomization coating are particularly preferable.

When the clear layer comprises two layers, the second clear coat paint composition (X) may be the clear coat paint composition of the present invention; and the first clear coat paint composition may be a known clear coat paint composition, such as a melamine-containing clear coat paint composition, or may be the clear coat paint composition of the present invention.

The method for forming a multilayer coating film according to a preferred embodiment comprises the steps of:
(1) applying an aqueous base coat paint composition (X) to a substrate to form a base coat coating film;
(2) applying the clear coat paint composition (Y) to the uncured base coat coating surface to form a clear coat coating film; and
(3) heating the uncured base coat coating film and the uncured clear coat coating film described above to simultaneously cure the films,
wherein the aqueous base coat paint composition (X) contains an amine compound (x1), and the clear coat paint composition (Y) is the clear coat paint composition of the present invention described above. Steps (1) to (3) are described below in detail.

### 1. Step (1)

Step (1) is a step of applying the aqueous base coat paint composition (X) to a substrate to form a base coat coating film on the substrate.

### Substrate

Examples of the substrate to be coated by the method for forming a multilayer coating film include, but are not limited to, exterior panel parts of vehicle bodies, such as passenger cars, trucks, motorcycles, and buses; vehicle components; exterior panel parts of household electric appliances, such as cellular phones and audio equipment; and the like. Of these substrates, exterior panel parts of vehicle bodies and vehicle components are preferable.

The material for the substrate is not particularly limited. Examples of the material include metallic materials, such as iron, aluminum, brass, copper, tin, stainless steel, galvanized steel, and steel plated with zinc alloys (Zn-Al, Zn-Ni, Zn-Fe, and the like); plastic materials, such as various types of fiber-reinforced plastics (FRP), polyethylene resins, polypropylene resins, acrylonitrile-butadiene-styrene (ABS) resins, polyamide resins, acrylic resins, vinylidene chloride resins, polycarbonate resins, polyurethane resins, epoxy resins, and like resins; inorganic materials, such as glass, cement, and concrete; wood; textile materials, such as paper and cloth; and the like. Of these materials, metallic materials and plastic materials are preferable.

Usable substrates also include exterior panel parts of vehicle bodies, vehicle components, household electric appliances; or metal substrates thereof, such as steel plates, whose metal surface may be subjected to a surface treatment, such as phosphate treatment, chromate treatment, or composite oxide treatment.

The substrate may or may not be surface-treated, and one or more coating film may be further formed thereon. For example, the substrate as a base material is surface-treated, if necessary, and a primer film may be formed thereon; and an intermediate coating film may be further formed on the primer film. For example, when the substrate is a vehicle body, the primer film and the intermediate coating film can be formed by using a known paint composition commonly used in the coating of vehicle bodies.

Specific examples of the primer paint composition for forming a primer film include electrodeposition paints, and preferably cationic electrodeposition paints. Examples of usable intermediate paint compositions for forming the intermediate coating film include paint compositions prepared using a base resin having a crosslinkable functional group (e.g., a carboxy or hydroxy group), such as acrylic resin, polyester resin, alkyd resin, urethane resin, and epoxy resin; and a crosslinking agent such as an amino resin, such as melamine resin or urea resin, and a blocked or unblocked polyisocyanate compound, together with a pigment, a thickening agent, and other optional components. In addition, the primer film and/or the intermediate coating film may be an uncured coating film.

In this specification, the phrase "applying the aqueous base coat paint composition (X) to the substrate" includes not only the case of directly applying the aqueous base coat paint composition (X) to the substrate, but also the case of applying the aqueous base coat paint composition (X) after the substrate is surface-treated and/or one or more additional layers, such as a primer film and/or an intermediate coating film, are formed on the substrate.

### Aqueous Base Coating Paint Composition (X)

For example, when the substrate is a vehicle body, known aqueous base coat paint compositions usually used in the coating of vehicle bodies can be used as the aqueous base coat paint composition (X).

Specific examples of the aqueous base coat paint composition (X) include a paint formed by dissolving or dispersing in water a base resin having a crosslinkable functional group (e.g., a carboxy or hydroxy group), such as acrylic resin, polyester resin, alkyd resin, urethane resin, or epoxy resin; and a crosslinking agent such as an amino resin, such as melamine resin or urea resin, and a blocked or unblocked polyisocyanate compound; together with a pigment, a thickening agent, and other optional components. Among them, a thermosetting aqueous paint comprising at least one resin selected from the group consisting of hydroxy-containing polyester resins and hydroxy-containing acrylic resins as a base resin, and comprising a melamine resin as a curing agent, can be preferably used.

Examples of the pigment include color pigments, extender pigments, and effect pigments. These pigments can be used singly, or in a combination of two or more.

Examples of color pigments include titanium oxide, zinc oxide, carbon black (including conductive carbon black), molybdenum red, Prussian blue, cobalt blue, azo pigments, phthalocyanine pigments, quinacridone pigments, isoindoline pigments, threne pigments, perylene pigments, dioxazine pigments, diketopyrrolopyrrole pigments, and the like.

Examples of extender pigments include talc, clay, kaolin, barium oxide, barium sulfate, barium carbonate, calcium carbonate, silica, alumina white, and the like.

Examples of effect pigments include non-leafing or leafing aluminum (including vapor-deposited aluminum), copper, zinc, brass, nickel, glass flakes, graphite flakes, aluminum oxide, mica, titanium oxide- or iron oxide-coated aluminum oxide, titanium oxide- or iron oxide-coated mica, and the like. Among them, at least one effect pigment selected from the group consisting of aluminum oxide, mica, titanium oxide- or iron oxide-coated aluminum oxide, and titanium oxide- or iron oxide-coated mica is preferably used. These effect pigments may be used singly, or in a combination of two or more.

The aqueous base coat paint composition (X) preferably contains an amine compound (x1).

The amine compound (x1) is used to neutralize a base resin having a crosslinkable functional group, such as a carboxy or hydroxy group. Adding the amine compound (x1) imparts enhanced storage stability of the paint and designability.

The amine compound (x1) is preferably a tertiary amine from the viewpoint of the distinctness of image of the obtained multilayer coating film. Examples of tertiary amines include trimethylamine (TMA), dimethylethylamine (DMEA), 2-dimethylaminoethanol (DMAE), tetramethylethylenediamine (TMED), N,N-dimethylaniline (DMAN), 1-methylpiperidine (MPIP), and the like; and 2-dimethylaminoethanol (DMAE) is preferable.

When the aqueous base coat paint composition (X) contains the above amine compound (x1), the amount of the amine compound (x1) is preferably 20 parts by mass or less, more preferably 15 parts by mass or less, and still more preferably 0.1 to 10 parts by mass, per 100 parts by mass of the solids content of the aqueous base coat paint composition (X).

The solids content of the aqueous base coat paint composition (X) can be usually 60% by mass or less, and the solids content at the time of application can be usually 10 to 50% by mass.

Examples of additives that can be added to the aqueous base coat paint composition (X) include commonly used additives for paints, such as UV absorbers, light stabilizers, antioxidants, surface adjusting agents, and anti-foaming agents, inclusive of those mentioned as examples for the clear coat paint composition (Y).

### 2. Step (2)

Step (2) is a step of applying the clear coat paint composition (Y) of the present invention to the uncured base coating surface formed in step (1) to form a clear coat coating film. The clear coat paint composition (Y) can be applied, for example, by air spray coating, airless spray coating, rotary atomization coating, curtain coating, and the like.

### 3. Step (3)

Step (3) is a step of heating the uncured base coat coating film formed in step (1) and the uncured clear coat coating film formed in step (2) to simultaneously cure the films.

The heating can be performed by a known means; for example, a drying furnace, such as a hot-air furnace, an electric furnace, or an infrared induction heating furnace can be used.

The heating temperature is preferably in the range of 70 to 180°C, and more preferably 80 to 170°C.

The heating time is not particularly limited, and is preferably in the range of 10 to 40 minutes, more preferably 20 to 30 minutes. The curing (baking) time can be changed depending on the curing temperature and the like. The curing time is preferably in the range of about 10 to 40 minutes at 100 to 170°C.

The base coat coating film formed of the aqueous base coat paint composition (X) generally has a dry film thickness of about 5 to 40 µm, and particularly preferably about 10 to 30 µm. A dry film thickness of 5 µm or more is advantageous in terms of masking the substrate. A dry film thickness of 40 µm or less is advantageous in terms of coating operation because popping, sagging, and the like are less likely to occur.

The dry film thickness of the clear coat coating film formed of the clear coat paint composition (Y) is generally in the range of about 10 to 80 µm, and preferably about 15 to 65 µm. A dry film thickness of 10 µm or more is advantageous in terms of the weather resistance of the coating film. A dry film thickness of 80 µm or less is advantageous in terms of coating operation because popping, sagging, and the like are less likely to occur.

In the present invention, after an intermediate coating film comprising a white pigment, such as titanium oxide, is formed on a substrate, an aqueous base coat paint composition comprising an effect pigment and/or a white pigment, and a clear coat paint composition are sequentially applied in such a manner that the clear coat paint composition has a film thickness of 60 µm (when dried). Subsequently, the intermediate coating film, the base coat paint composition, and the clear coat paint composition are simultaneously heated at 160°C to cure the films, thus preparing a white test plate. When the conditions are set as described above, and a change in b* value in the L*a*b* color system (JIS Z 8729 (2004)) of the test plate over time is calculated by subtracting b* value (b₁) of the test plate measured using a multi-angle spectrophotometer immediately after preparing the test plate from b* value (b₂) of the test plate measured using the same multi-angle spectrophotometer after being left in a place exposed to sunlight for 5 days, the absolute value of the change in b* value over time, b₂ - b₁ (Δb), is preferably 1 or less, and more preferably less than 0.8.
The b* value (b₁, b₂) is for, among lights reflected when the surface of a test substrate to be measured is irradiated with light at an angle of 45° with respect to the axis perpendicular to the target surface, light reflected in a direction perpendicular to the target surface (light having a deflection angle of 45° from specular reflection light) and measured using a multi-angle spectrophotometer "BYK-mac" (tradename, produced by BYK-Gardner). Since the color of the substrate is masked by the multilayer coating, the b* value of the test plate can also be considered to be the b* value of the multilayer coating film. With this configuration, a multilayer coating film that is less susceptible to fading of yellowish color over time, i.e., a multilayer coating film in which yellowish color loss is less likely to occur, can be produced.

The present invention may also take the following configurations.
[1] A clear coat paint composition comprising
   (A) a carboxy-containing polymer,
   (B) an epoxy-containing acrylic resin, and
   (C) an antioxidant having a phenyl group and a sulfide bond.

   With this configuration, a clear coat paint composition that has excellent acid resistance, smoothness, gloss, and waterproof adhesion; and whose color change over time after being left outdoors is significantly suppressed, can be obtained.
[2] The clear coat paint composition according to [1], wherein the amount of the antioxidant having a phenyl group and a sulfide bond (C) is 0.1 to 10 parts by mass, per 100 parts by mass of the solids content of the clear coat paint composition.
   With this configuration, while color change over time of the multilayer coating film, which is left outdoors, is effectively suppressed, a decrease in the curability of the multilayer coating film can be prevented.
[3] The clear coat paint composition according to [1] or [2], wherein the carboxy-containing polymer comprises a vinyl polymer having a half-esterified acid anhydride group (A-1) and a carboxy-containing polyester polymer (A-2).
   With this configuration, a clear coat paint composition that has excellent acid resistance, smoothness, gloss, and waterproof adhesion can be obtained.
[4] The clear coat paint composition according to [3], wherein the vinyl polymer having a half-esterified acid anhydride group (A-1) has a number average molecular weight of 1000 to 10000.
   With this configuration, excellent compatibility with the epoxy-containing acrylic resin can be provided, and the coating film of the clear coat paint composition can have excellent acid resistance and gloss.
[5] The clear coat paint composition according to [3] or [4], wherein the carboxy-containing polyester polymer (A-2) has a number average molecular weight of 500 to 10000.
   With this configuration, the coating film of the clear coat paint composition can have excellent acid resistance and gloss.
[6] The clear coat paint composition according to any one of [1] to [5], wherein the proportion of the total amount of the carboxy-containing polymer (A) and the epoxy-containing acrylic resin (B) in the clear coat paint composition is 70% by mass or more on a solids basis.
   With this configuration, the clear coat paint composition can have excellent acid resistance.
[7] The clear coat paint composition according to any one of [1] to [6], wherein the proportions of the carboxy-containing polymer (A) and epoxy-containing acrylic resin (B) are such that the proportion of the component (A) is 20 to 80 mass%, and the proportion of the component (B) is 80 to 20 mass%, based on the total amount of the components (A) and (B) on a solids basis.
   With this configuration, the clear coat coating film formed of the clear coat paint composition can have excellent acid resistance and waterproof adhesion.
[8] The clear coat paint composition according to any one of [1] to [7], wherein the antioxidant having a phenyl group and a sulfide bond (C) is at least one member selected from the group consisting of 4-[[4,6-bis(octylthio)-1,3,5-triazin-2-yl]amino]-2,6-di-tert-butylphenol, 2,2'-thiodiethylbis[3-(3,5-di-tert-butyl-4-hydroxyphenyl)propionate], 2,4-bis(octylthiomethyl)-6-methylphenol, and 2,4-bis(dodecylthiomethyl)-6-methylphenol.
   With this configuration, color change over time of the multilayer coating film that is left outdoors can be effectively suppressed.
[9] A method for forming a multilayer coating film comprising the steps of:
   (1) applying an aqueous base coat paint composition (X) to a substrate to form a base coat coating film;
   (2) applying a clear coat paint composition (Y) to an uncured base coating surface to form a clear coat coating film; and
   (3) heating the uncured base coat coating film and the uncured clear coat coating film to simultaneously cure the films;
   wherein the aqueous base coat paint composition (X) contains an amine compound (x1), and the clear coat paint composition (Y) is the clear coat paint composition according to any one of [1] to [8].
   With this configuration, a multilayer coating film that has excellent acid resistance, smoothness, gloss, waterproof adhesion, and designability; and whose color change over time after being left outdoors is significantly suppressed, can be formed.
[10] The method for forming a multilayer coating film according to [9], wherein the amine compound (x1) is a tertiary amine.
   With this configuration, the multilayer coating film has improved distinctness of image.
[11] The method for forming a multilayer coating film according to [10], wherein the tertiary amine is at least one member selected from the group consisting of trimethylamine (TMA), dimethylethylamine (DMEA), 2-dimethylaminoethanol (DMAE), tetramethylethylenediamine (TMED), N,N-dimethylaniline (DMAN), and 1-methylpiperidine (MPIP).
   With this configuration, the multilayer coating film has improved distinctness of image.
[12] The method for forming a multilayer coating film according to any one of [9] to [11], wherein the base coat coating film of the aqueous base coat paint composition (X) has a film thickness of 5 to 40 µm (when dried).
   With this configuration, the method is advantageous in terms of concealing the substrate of the aqueous base coat coating film, and also advantageous in terms of painting operation.
[13] The method for forming a multilayer coating film according to any one of [9] to [12], wherein the clear coat of the clear coat paint composition (Y) has a film thickness of 10 to 80 µm (when dried).
   With this configuration, the method is advantageous in terms of weather resistance of the clear coat coating film, and also advantageous in terms of coating operation.
[14] A multilayer coating film comprising:
   an intermediate coating film formed of an intermediate paint composition that comprises a white pigment, and is applied to a substrate and cured;
   an aqueous base coat coating film formed of an aqueous base coat paint composition (X) comprising an effect pigment and/or a white pigment, and applied to the intermediate paint composition; and
   a clear coat coating film formed of the clear coat paint composition according to any one of [1] to [8] that is applied to the aqueous base coat paint composition (X),
      the multilayer coating film being formed by simultaneously heating the aqueous base coat coating film and the clear coat coating film to cure the films,
      wherein when a test plate is prepared by applying the clear coat paint composition to a film thickness of 60 µm (when dried), and simultaneously heating the base coat coating film and the clear coat coating film at 160°C for curing, and a change in b* value in the L*a*b* color system (JIS Z 8729 (2004)) of the test plate over time is calculated by subtracting b* value (b₁) of the test plate measured using a multi-angle spectrophotometer immediately after preparing the test plate from b* value (b₂) of the test plate measured using the same multi-angle spectrophotometer after being left in a place exposed to sunlight for 5 days, the absolute value of the change in b* value over time, b₂ - b₁ (Δb), is 1 or less.

With this configuration, a multilayer coating film that is less susceptible to fading of yellowish color over time, i.e., a multilayer coating film in which yellowish color loss is less likely to occur, can be produced.

The present invention is described below in more detail with reference to Production Examples, Examples, and Comparative Examples. The Production Examples, Examples, and Comparative Examples merely illustrate certain particular embodiments, and are not intended to limit the scope of the claims. The "parts" and "%" are based on mass, unless otherwise specified. The coating film thickness is the thickness of the cured coating film.

### Examples

### 1. Production of Carboxy-Containing Polymer (A)

### Production Example 1: Production of Vinyl Polymer Having Half-Esterified Acid Anhydride Group (A-1)

680 parts of "Swasol 1000" (trade name, produced by Cosmo Oil Co., Ltd.; a hydrocarbon organic solvent) was placed in a four-necked flask equipped with a stirrer, a thermometer, a cooling tube, and a nitrogen gas inlet, and heated to 125°C in a nitrogen gas flow. After the temperature reached 125°C, the flow of nitrogen gas was stopped, and the following monomer mixture I having a formulation comprising a monomer, a solvent, and a polymerization initiator (p-tert-butylperoxy-2-ethylhexanoate) was added dropwise over a period of 4 hours.

### Monomer mixture I

Styrene: 500 parts
Cyclohexyl methacrylate: 500 parts
Isobutyl methacrylate: 500 parts
Maleic anhydride: 500 parts
2-Ethoxyethyl propionate: 1000 parts
p-Tert-butylperoxy-2-ethylhexanoate: 100 parts

After the resulting mixture was aged for 30 minutes while flowing nitrogen gas at 125°C, a mixture of 10 parts of p-tert-butylperoxy-2-ethylhexanoate and 80 parts of "Swasol 1000" was further added dropwise over a period of 1 hour. After cooling to 60°C, 490 parts of methanol and 4 parts of triethylamine were added, and a half-esterification reaction was carried out by heating under reflux for 4 hours. Then, 326 parts of the excess methanol was removed under reduced pressure, thereby obtaining a solution of a vinyl polymer having a half-esterified acid anhydride group (A-1).

The obtained polymer solution had a solids content of 55 mass% and a number average molecular weight of about 3500. Moreover, the acid value of this polymer was 130 mgKOH/g.

### Production Example 2: Production of Carboxy-Containing Polyester Polymer (A-2)

566 parts of 1,6-hexanediol, 437 parts of trimethylolpropane, 467 parts of adipic acid, and 308 parts of hexahydrophthalic anhydride were placed in a four-necked flask equipped with a stirrer, a thermometer, a cooling tube, and a nitrogen gas inlet, and heated to 180°C in a nitrogen atmosphere. Thereafter, the mixture was heated to 230°C over 3 hours, and reacted at 230°C for 1 hour. Then, xylene was added, and the resulting mixture was reacted under reflux. After it was confirmed that the resin acid value reached 3 mgKOH/g or less, the resultant was cooled to 100°C, and 1294 parts of hexahydrophthalic anhydride was added. The resulting mixture was heated to 140°C again and reacted for 2 hours. After cooling, the resultant was diluted with xylene, thereby obtaining a solution of a carboxy-containing polyester polymer (A-2) having a solids content of 65 mass%. This polyester had a number average molecular weight of 1040 and a resin acid value of 160 mgKOH/g.

### 2. Production of Epoxy-Containing Acrylic Resin (B) Production Example 3

410 parts of xylene and 77 parts of n-butanol were placed in a four-necked flask equipped with a stirrer, a thermometer, a cooling tube, and a nitrogen gas inlet, and heated to 125°C in a nitrogen gas flow. After the temperature reached 125°C, the flow of nitrogen gas was stopped, and the following monomer mixture III was added dropwise over a period of 4 hours.

### Monomer mixture III

Styrene: 288 parts
n-Butyl acrylate: 720 parts
Glycidyl methacrylate: 432 parts
2,2-Azobisisobutyronitrile: 72 parts

After the resulting mixture was aged for 30 minutes while flowing nitrogen gas at 125°C, a mixture of 90 parts of xylene, 40 parts of n-butanol, and 14.4 parts of 2,2-azobisisobutyronitrile was further added dropwise over a period of 2 hours. The resulting mixture was then aged for 2 hours, thereby obtaining a solution of an epoxy-containing acrylic resin (B) having a solids content of 70 mass%. The epoxy-containing acrylic resin (B) had a number average molecular weight of 2000 and an epoxy content of 2.12 mmol/g.

### 3. Production of Clear Coat Paint Composition (Y) Examples 1 to 5 and Comparative Examples 1 to 6

The vinyl polymer having a half-esterified acid anhydride group (A-1) obtained in Production Example 1, the carboxy-containing polyester polymer (A-2) obtained in Production Example 2, the epoxy-containing acrylic resin (B) obtained in Production Example 3, the following antioxidant (C), and other components, such as a curing catalyst, were stirred and mixed using a rotary blade stirrer. Further, "Swasol 1000" (trade name, produced by Cosmo Oil Co., Ltd.; a hydrocarbon solvent) was added to adjust the viscosity by Ford cup No. 4 at 20°C to 30 seconds, thereby obtaining clear coat paint compositions of Examples 1 to 5 and Comparative Examples 1 to 6 (corresponding to the production examples of clear coat paint compositions Y-1 to Y-11, respectively).

Table 1 shows the components of each paint composition, and the equivalent ratio of carboxy groups/epoxy groups.

**Table 1**

| | | | Example | | | | | Comparative Example | | | | | |
|---|---|---|---|---|---|---|---|---|---|---|---|---|---|
| | | | 1 | 2 | 3 | 4 | 5 | 1 | 2 | 3 | 4 | 5 | 6 |
| Name of clear paint composition | | | Y-1 | Y-2 | Y-3 | Y-4 | Y-5 | Y-6 | Y-7 | Y-8 | Y-9 | Y-10 | Y-11 |
| Carboxy-containing polymer (A) | Vinyl polymer having half-esterified acid anhydride group (A-1) | | 38 | 38 | 38 | 38 | 38 | 38 | 38 | 38 | 38 | 25 | 38 |
| | Carboxy-containing polyester polymer (A-2) | | 10 | 10 | 10 | 10 | 10 | 10 | 10 | 10 | 10 | 10 | 10 |
| Aliphatic tricarboxylic acid | | 1,3,6-hexane tricarboxylic acid | | | | | | | | | | 5 | |
| Epoxy-containing acrylic resin (B) | | | 52 | 52 | 52 | 52 | 52 | 52 | 52 | 52 | 52 | 60 | 52 |
| Antioxidant having phenyl group and sulfide bond (C) | | "IRGANOX 1520L" (Note 1) | 1 | | 1 | 2 | 1 | | | | | | |
| | | "IRGANOX 1726" (Note 2) | | 1 | | | | | | | | | |
| Antioxidant other than antioxidant (C) | Phenol-based | "Sumilizer GA80" (Note 3) | | | | | | 1 | | | 1 | | |
| | | "IRGANOX 1010" (Note 4) | | | | | | | 1 | | | 1 | |
| | Thioether-based | "ADK STAB AO-503" (Note 5) | | | 1 | | | | | 1 | 1 | | |
| | Phosphite-based | "IRGAFOS 168" (Note 6) | | | | | 1 | | | | | | |
| Curing catalyst | | (Note 7) | 2 | 2 | 2 | 2 | 2 | 2 | 2 | 2 | 2 | 2 | 2 |
| Ultraviolet absorber | | "UV1164" (Note 8) | 2 | 2 | 2 | 2 | 2 | 2 | 2 | 2 | 2 | 2 | 2 |
| Light stabilizer | | "HALS292" (Note 9) | 2 | 2 | 2 | 2 | 2 | 2 | 2 | 2 | 2 | 2 | 2 |
| Surface adjusting agent | | "BYK-300" (Note 10) | 0.2 | 0.2 | 0.2 | 0.2 | 0.2 | 0.2 | 0.2 | 0.2 | 0.2 | 0.2 | 0.2 |
| Equivalent ratio of carboxy groups/epoxy groups | | | 1.06 | 1.06 | 1.06 | 1.06 | 1.06 | 1.06 | 1.06 | 1.06 | 1.06 | 1.22 | 1.06 |

The mixing amount of each component shown in Table 1 represents solids content (part by mass). Further, (Note 1) to (Note 9) in Table 1 mean the following.
(Note 1) "IRGANOX 1520L": trade name, produced by BASF A.G.; an antioxidant having a phenyl group and a sulfide bond, 2,4-bis(octylthiomethyl)-6-methylphenol.
(Note 2) "IRGANOX 1726": trade name, produced by BASF A.G.; an antioxidant having a phenyl group and a sulfide bond, 2,4-bis(dodecylthiomethyl)-6-methylphenol.
(Note 3) "Sumilizer GA80": trade name, produced by Sumitomo Chemical Co., Ltd.; a phenol-based antioxidant, 3,9-bis[2-[3-(3-tert-butyl-4-hydroxy-5-methylphenyl)propionyloxy]-1,1-dimethylethyl]-2,4,8,10-tetraoxaspiro[5.5]undecane.
(Note 4) "IRGANOX 1010": trade name, produced by BASF A.G.; a phenol-based antioxidant, pentaerythritol tetrakis[3-(3,5-di-tert-butyl-4-hydroxyphenyl) propionate.
(Note 5) "ADK STAB AO-503": trade name, produced by Adeka; a thioether-based antioxidant, ditridecyl-3,3'-thiodipropionate.
(Note 6) "IRGAFOS 168": trade name, produced by BASF A.G.; a phosphite-based antioxidant, tris(2,4-di-tert-butylphenyl)phosphite.
(Note 7) Curing catalyst: an equivalent mixture of tetrabutylammonium bromide and monobutyl phosphoric acid.
(Note 8) "UV1164": trade name, produced by Cytec; an ultraviolet absorber, 2,4-bis(2,4-dimethylphenyl)-6-(2-hydroxy-4-isooctyloxyphenyl)-1,3,5-triazine.
(Note 9) "HALS292": trade name, produced by BASF A.G.; a light stabilizer, a mixture of bis(1,2,2,6,6-pentamethyl-4-piperidyl)sebacate and methyl(1,2,2,6,6-pentamethyl-4-piperidyl)sebacate.
(Note 10) "BYK-300": trade name, produced by BYK-Chemie; a surface adjusting agent, polyether-modified polydimethylsiloxane).

### 4. Production of Aqueous Base Coat Paint Composition (X) Production Example 4: Production of Hydroxy-Containing Acrylic Resin (A1-1)

128 parts of deionized water and 3 parts of "Adeka Reasoap SR-1025" (trade name, produced by Adeka; an emulsifier, active ingredient: 25%) were placed in a reaction vessel equipped with a thermometer, a thermostat, a stirrer, a reflux condenser, a nitrogen gas inlet tube, and a dropping funnel. The mixture was stirred and mixed in a nitrogen flow, and heated to 80°C.

Subsequently, 1% of the entire amount of monomer emulsion for a core portion, which is described below, and 5.3 parts of a 6% ammonium persulfate aqueous solution were introduced into the reaction vessel, and maintained therein at 80°C for 15 minutes. Thereafter, the remaining monomer emulsion for the core portion was added dropwise over a period of 3 hours to the reaction vessel maintained at the same temperature. After completion of the dropwise addition, the mixture was aged for 1 hour. Subsequently, a monomer emulsion for a shell portion, which is described below, was added dropwise over a period of 1 hour, followed by aging for 1 hour. Thereafter, the mixture was cooled to 30°C while gradually adding 40 parts of a 5% 2-(dimethylamino)ethanol aqueous solution thereto, and then filtered through a 100-mesh nylon cloth, thereby obtaining a water-dispersible hydroxy-containing acrylic resin water dispersion (A1-1) having an average particle size of 95 nm and a solids content of 30%. The obtained water-dispersible hydroxy-containing acrylic resin had an acid value of 33 mgKOH/g and a hydroxy value of 25 mgKOH/g.

Monomer emulsion for the core portion: 40 parts of deionized water, 2.8 parts of "Adeka Reasoap SR-1025," 2.1 parts of methylene bisacrylamide, 2.8 parts of styrene, 16.1 parts of methyl methacrylate, 28 parts of ethyl acrylate, and 21 parts of n-butyl acrylate were mixed and stirred, thereby obtaining a monomer emulsion for the core portion.

Monomer emulsion for the shell portion: 17 parts of deionized water, 1.2 parts of "Adeka Reasoap SR-1025," 0.03 parts of ammonium persulfate, 3 parts of styrene, 5.1 parts of 2-hydroxyethyl acrylate, 5.1 parts of methacrylic acid, 6 parts of methyl methacrylate, 1.8 parts of ethyl acrylate, and 9 parts of n-butyl acrylate were mixed and stirred, thereby obtaining a monomer emulsion for the shell portion.

### Production Example 5: Production of Hydroxy-Containing Acrylic Resin Solution (Al-2)

35 parts of propylene glycol monopropyl ether was placed in a reaction vessel equipped with a thermometer, a thermostat, a stirrer, a reflux condenser, a nitrogen gas inlet tube, and a dropping funnel, and heated to 85°C. Subsequently, a mixture comprising 30 parts of methyl methacrylate, 20 parts of 2-ethylhexyl acrylate, 29 parts of n-butyl acrylate, 15 parts of 2-hydroxyethyl acrylate, 6 parts of acrylic acid, 15 parts of propylene glycol monopropyl ether, and 2.3 parts of 2,2'-azobis(2,4-dimethylvaleronitrile) was added dropwise thereto over a period of 4 hours. After completion of the dropwise addition, the mixture was aged for 1 hour. Subsequently, a mixture of 10 parts of propylene glycol monopropyl ether and 1 part of 2,2'-azobis(2,4-dimethylvaleronitrile) was further added dropwise thereto over a period of 1 hour. After completion of the dropwise addition, the mixture was aged for 1 hour. 7.4 parts of diethanolamine and 13 parts of propylene glycol monopropyl ether were further added thereto, thereby obtaining a hydroxy-containing acrylic resin solution (A1-2) having a solids content of 55%. The obtained hydroxy-containing acrylic resin had an acid value of 47 mgKOH/g and a hydroxy value of 72 mgKOH/g.

### Production Example 6: Production of Hydroxy-Containing Polyester Resin (A2)

109 parts of trimethylolpropane, 141 parts of 1,6-hexanediol, 126 parts of 1,2-cyclohexanedicarboxylic anhydride, and 120 parts of adipic acid were placed in a reaction vessel equipped with a thermometer, a thermostat, a stirrer, a reflux condenser, a nitrogen gas inlet tube, and a water separator. The mixture was heated to a range of 160°C to 230°C over a period of 3 hours, followed by a condensation reaction at 230°C for 4 hours. Subsequently, to introduce a carboxy group to the obtained condensation reaction product, 38.3 parts of trimellitic anhydride was added to the product, followed by a reaction at 170°C for 30 minutes. Thereafter, the product was diluted with 2-ethyl-1-hexanol, thereby obtaining a hydroxy-containing polyester resin solution (A2-1) having a solids content of 70%. The obtained hydroxy-containing polyester resin had an acid value of 46 mgKOH/g, a hydroxy value of 150 mgKOH/g, and a number average molecular weight of 1400.

### Production Example 7: Production of Effect Pigment Dispersion

In a stirring vessel, 11 parts of "Iriodin 103" (trade name, produced by Merck Japan; a mica-based effect pigment), 34.8 parts of 2-ethyl-1-hexanol, 8 parts (solids content: 4 parts) of the following phosphate group-containing resin solution, and 0.2 parts of 2-(dimethylamino)ethanol were uniformly mixed, thereby obtaining an effect pigment dispersion (P-1).

Phosphate group-containing resin solution: A mixed solvent of 27.5 parts of methoxypropanol and 27.5 parts of isobutanol was placed in a reaction vessel equipped with a thermometer, a thermostat, a stirrer, a reflux condenser, a nitrogen gas inlet tube, and a dropping funnel, and heated to 110°C. 121.5 parts of a mixture comprising 25 parts of styrene, 27.5 parts of n-butyl methacrylate, 20 parts of "Isostearyl Acrylate" (trade name, produced by Osaka Organic Chemical Industry Ltd.; branched higher alkyl acrylate), 7.5 parts of 4-hydroxybutyl acrylate, 15 parts of the following phosphate group-containing polymerizable monomer, 12.5 parts of 2-methacryloyloxyethyl acid phosphate, 10 parts of isobutanol, and 4 parts of t-butylperoxy octanoate was added to the above mixed solvent over 4 hours. Further, a mixture comprising 0.5 parts of t-butylperoxy octanoate and 20 parts of isopropanol was added dropwise for 1 hour. Then, the resultant was stirred and aged for 1 hour, thereby obtaining a phosphate group-containing resin solution having a solids concentration of 50%. The acid value based on the phosphate group of this resin was 83 mgKOH/g, the hydroxy value was 29 mgKOH/g, and the weight average molecular weight was 10000.

Phosphate group-containing polymerizable monomer: 57.5 parts of monobutyl phosphoric acid and 41 parts of isobutanol were placed in a reaction vessel equipped with a thermometer, a thermostat, a stirrer, a reflux condenser, a nitrogen gas inlet tube, and a dropping funnel, and heated to 90°C. After 42.5 parts of glycidyl methacrylate was added dropwise over 2 hours, the mixture was stirred and aged for 1 hour. Thereafter, 59 parts of isopropanol was added, thereby obtaining a phosphate group-containing polymerizable monomer solution having a solids concentration of 50%. The acid value of the obtained monomer was 285 mgKOH/g.

### Production Example 8: Production of Aqueous Base Coat Paint Composition

In a stirring vessel, 100 parts (solids content: 30 parts) of the water-dispersible hydroxy-containing acrylic resin water dispersion (Al-1) obtained in Production Example 4, 18 parts (solids content: 10 parts) of the hydroxy-containing acrylic resin solution (A1-2) obtained in Production Example 5, 43 parts (solids content: 30 parts) of the hydroxy-containing polyester resin solution (A2-1) obtained in Production Example 6, 54 parts of the effect pigment dispersion (P-1) obtained in Production Example 7, and 37.5 parts (solids content: 30 parts) of "Cymel 325" (trade name, produced by Allnex; a melamine resin, solids content: 80%) were uniformly mixed. Further, "Primal ASE-60" (trade name, produced by Rohm and Haas; a polyacrylic acid-based thickener), 2-(dimethylamino)ethanol, and deionized water were added, thereby obtaining an aqueous base coat paint (X-1) having a pH of 8.0, a paint solids content of 25%, and a viscosity by Ford cup No. 4 at 20°C of 40 seconds.

### Production Example 9: Production of Aqueous Base Coat Paint Composition

2-Amino-2-methyl-1-propanol was added in place of the 2-(dimethylamino)ethanol in Production Example 8, and an aqueous base coat paint (X-2) was obtained.

### 5. Production of Aqueous Intermediate Paint Composition Production Example 10: Production of Hydroxy-Containing Polyester Resin

174 parts of trimethylolpropane, 327 parts of neopentyl glycol, 352 parts of adipic acid, 109 parts of isophthalic acid, and 101 parts of 1,2-cyclohexanedicarboxylic anhydride were placed in a reaction vessel equipped with a thermometer, a thermostat, a stirrer, a reflux condenser, and a water separator. The mixture was heated to a range of 160 to 230°C over a period of 3 hours, and maintained at 230°C while distilling off the generated condensed water with the water separator. The reaction was continued until the acid value reached 3 mgKOH/g or less. 59 parts of trimellitic anhydride was added to the reaction product, and an addition reaction was performed at 170°C for 30 minutes. After cooling to 50°C or less, 2-(dimethylamino)ethanol was added in an equivalent amount with respect to acid groups to perform neutralization, and deionized water was gradually added, thereby obtaining a hydroxy-containing polyester resin solution (A2-2) having a solids concentration of 45% and a pH of 7.2. The obtained hydroxy-containing polyester resin had an acid value of 35 mgKOH/g, a hydroxy value of 128 mgKOH/g, and a weight average molecular weight of 13000.

### Production Example 11: Production of White Pigment Dispersion

In a stirring vessel, 56 parts (resin solids content: 25 parts) of the hydroxy-containing polyester resin solution (A2-2) obtained in Production Example 10, 90 parts of "JR-806" (trade name, produced by Tayca Corporation; rutile titanium dioxide), and 5 parts of deionized water were placed. Further, 2-(dimethylamino)ethanol was added, and the pH was adjusted to 8.0. Subsequently, the obtained mixture was placed in a wide-mouth glass bottle, glass beads having a diameter of about 1.3 mm were added as dispersion media, and the glass bottle was sealed. Then, the mixture was dispersed for 30 minutes using a paint shaker, thereby obtaining a white pigment dispersion (P-2).

### Production Example 12: Production of Aqueous Intermediate Paint Composition

Next, 151 parts of the pigment dispersion (P-2) obtained in Production Example 11, 27 parts (resin solids content: 15 parts) of the hydroxy-containing acrylic resin solution (A1-2) obtained in Production Example 5, 11 parts (resin solids content: 5 parts) of the hydroxy-containing polyester resin solution (A2-2) obtained in Production Example 10, 43 parts (resin solids content: 15 parts) of "U-COAT UX-8100" (trade name, produced by Sanyo Chemical Industries, Ltd.; a urethane emulsion, solids content: 35%), 37.5 parts (resin solids content: 30 parts) of "Cymel 325" (trade name, produced by Allnex; a melamine resin, solids content: 80%), and 26 parts (resin solids content: 10 parts) of "Bayhydur VPLS2310" (trade name, produced by Sumika Bayer Urethane Co., Ltd.; a blocked polyisocyanate compound, solids content: 38%) were uniformly mixed.

Subsequently, "Primal ASE-60" (trade name, produced by The Dow Chemical Company; a thickener), 2-(dimethylamino)ethanol, and deionized water were added to the obtained mixture, thereby obtaining an aqueous intermediate paint having a pH of 8.0, a paint solids content of 48%, and a viscosity by Ford cup No. 4 at 20°C of 30 seconds.

### 6. Preparation of Substrate

### Production Example 13

A thermosetting epoxy resin cationic electrodeposition paint composition (trade name: "Elecron GT-10," produced by Kansai Paint Co., Ltd.) was applied by electrodeposition to a zinc phosphate-treated cold-rolled steel plate (30 cm x 45 cm) to a film thickness of 20 µm. The resulting film was cured by heating at 170°C for 30 minutes. Subsequently, the aqueous intermediate paint composition obtained in Production Example 12 was applied to a film thickness of 20 µm using a rotary atomization-type bell-shaped coating device, and the resulting film was allowed to stand for 2 minutes, followed by preheating at 80°C for 3 minutes. Thus, a substrate 1 with a cured electrodeposition coating film and an uncured intermediate coating film formed on a steel plate was produced.

### Production Example 14

A thermosetting epoxy resin cationic electrodeposition paint composition (trade name: "Elecron GT-10," produced by Kansai Paint Co., Ltd.) was applied by electrodeposition to a zinc phosphate-treated cold-rolled steel plate (30 cm x 45 cm) to a film thickness of 20 µm. The resulting film was cured by heating at 170°C for 30 minutes. Subsequently, the aqueous intermediate paint composition obtained in Production Example 12 was applied to a film thickness of 20 µm using a rotary atomization-type bell-shaped coating device, and the resulting film was allowed to stand for 2 minutes, followed by preheating at 80°C for 3 minutes. Then, the resultant was heated at 140°C for 30 minutes to cure the intermediate coating film. Thus, a substrate 2 with a cured electrodeposition coating film and a cured intermediate coating film formed on a steel plate was produced.

### 7. Production of Test Plate

### Example 6

The aqueous base coat paint composition (X-1) obtained in Production Example 8 was applied to the substrate 1 obtained in Production Example 13 to a film thickness of 15 µm using a rotary atomization-type bell-shaped coating device, and the resulting film was allowed to stand for 2 minutes, followed by preheating at 80°C for 3 minutes. Subsequently, the clear coat paint composition (Y-1) obtained in Example 1 was applied to the uncured coating surface to a film thickness of 60 µm. The resulting film was allowed to stand for 7 minutes, and then heated at 160°C for 30 minutes to cure the intermediate coating film, the base coat coating film, and the clear coating film, thereby producing a test plate.

### Examples 7 to 11 and Comparative Examples 7 to 12

Test plates of Examples 7 to 11 and Comparative Examples 7 to 12 were also produced in the same manner as in Example 6, except that the aqueous base coat paint composition (X-1) and the clear coat paint composition (Y-1) were changed as shown in Table 2.

### Example 12

The aqueous base coat paint composition (X-1) obtained in Production Example 8 was applied to the substrate 2 obtained in Production Example 14 to a film thickness of 15 µm using a rotary atomization-type bell-shaped coating device, and the resulting film was allowed to stand for 2 minutes, followed by preheating at 80°C for 3 minutes. Subsequently, the clear coat paint composition (Y-1) obtained in Example 1 was applied to the uncured coating surface to a film thickness of 60 µm. The resulting film was allowed to stand for 7 minutes, and then heated at 160°C for 30 minutes to cure the base coat coating film and the clear coating film, thereby producing a test plate.

### 8. Evaluation of Coating Film

The appearance and performance of the coating film of each test plate obtained in the above manner were evaluated. Table 2 shows the results.

### Appearance Evaluation

Color change over time: Immediately after production of the test plates obtained in Examples 6 to 12 and Comparative Examples 7 to 12, the b* values (b₁) of the test plates were measured using a multi-angle spectrophotometer (trade name: "BYK-mac," produced by BYK-Gardner). The b* value is for, among lights reflected when the surface to be measured is irradiated with light at an angle of 45° with respect to the axis perpendicular to the target surface, light reflected in a direction perpendicular to the target surface (light having a deflection angle of 45° from specular reflection light) (JIS Z 8729 (2004)). After the test plate was allowed to stand for 5 days in a place exposed to sunlight, the b* value (b₂) of the test plate was measured, and the change over time b₂-b₁ (Δb) of the b* values was determined. A smaller absolute value of Δb indicates that the color change over time is more suppressed.

Distinctness of image: The test plates were evaluated using Wa values measured by Wave Scan DOI (trade name, produced by BYK Gardner). A smaller Wa value indicates a higher distinctness of image of the coating surface.

Waterproof adhesion: Each test plate was immersed in warm water at 40°C for 240 hours. After the test plate was removed from the water, cross-cuts reaching the substrate were made in the multilayer coating film of the test plate using a cutter knife to form a grid of 100 squares (2 mm x 2 mm). Subsequently, adhesive cellophane tape was applied to the surface of the grid portion, and the tape was peeled off rapidly at 20°C. Then, the condition of the remaining squares was checked.
S: Remaining number of squares/total number of squares = 100/100, no edge-peeling
A: Remaining number of squares/total number of squares = 100/100, edge-peeling
B: Remaining number of squares/total number of squares = 99 to 90/100
C: Remaining number of squares/total number of squares = 89 or less/100

Acid resistance: 0.4 cc of 40% aqueous sulfuric acid solution was added dropwise to the coating film of each coated test plate. The test plate was heated for 15 minutes on a hot plate heated to 60°C, and then washed with water. The etching depth (µm) of the portion at which the sulfuric acid had been dropped was measured using a surface roughness tester (trade name: "Surfcom 570A," produced by Tokyo Seimitsu Co., Ltd.) with a cutoff of 0.8 mm (scanning rate of 0.3 mm/sec, 5,000x magnification) to evaluate the acid resistance. A smaller etching depth indicates better acid resistance.

Smoothness: The test plates were evaluated using Wc values measured by Wave Scan DOI (trade name, produced by BYK Gardner). The Wc value is an index of the amplitude of surface roughness at a wavelength of about 1 to 3 mm. A smaller measured value indicates a higher smoothness of the coating surface.

Gloss: The 20-degree specular reflection (20° gloss value) of each coated test plate was evaluated using values measured with a handy glossmeter (trade name: "HG-268," produced by Suga Test Instruments Co., Ltd.).

**Table 2**

| | | Example | | | | | | | Comparative Example | | | | | |
|---|---|---|---|---|---|---|---|---|---|---|---|---|---|---|
| | | 6 | 7 | 8 | 9 | 10 | 11 | 12 | 7 | 8 | 9 | 10 | 11 | 12 |
| Aqueous base coat paint composition (X) | | X-1 | X-1 | X-1 | X-2 | X-1 | X-1 | X-1 | X-1 | X-1 | X-1 | X-1 | X-1 | X-1 |
| Clear paint composition (Y) | | Y-1 | Y-2 | Y-3 | Y-1 | Y-4 | Y-5 | Y-1 | Y-6 | Y-7 | Y-8 | Y-9 | Y-10 | Y-11 |
| Evaluation | Color change over time | -0.7 | -0.5 | -0.5 | -0.5 | -0.1 | -0.4 | -0.4 | -1.3 | -1.2 | -1.4 | -1.3 | -1.2 | -1.6 |
| | Distinctness of image (Wa) | 7 | 7 | 8 | 11 | 8 | 7 | 5 | 7 | 8 | 7 | 8 | 8 | 7 |
| | Waterproof adhesion | S | S | S | S | S | S | S | S | S | S | S | C | S |
| | Acid resistance | 0.3 | 0.3 | 0.3 | 0.3 | 0.3 | 0.3 | 0.3 | 0.3 | 0.3 | 0.3 | 0.3 | 0.5 | 0.3 |
| | Smoothness | 10 | 10 | 11 | 14 | 11 | 10 | 8 | 10 | 10 | 10 | 10 | 12 | 10 |
| | Gloss | 86 | 86 | 87 | 86 | 86 | 87 | 86 | 86 | 86 | 87 | 86 | 84 | 86 |

As shown in Table 2, the test plates of Examples 6 to 12 show excellent results of change over time, distinctness of image, waterproof adhesion, acid resistance, smoothness, and gloss. In particular, the color changes over time of the test plates of Examples 6 to 12 were more suppressed than in the test plates of Comparative Examples 7 to 12.

Further, regarding the measurement of color change over time, Table 3 shows b* values (b₁) and b* values (b₂) . Unexpectedly, it was revealed that in the multilayer coating films of Examples 6 to 12, the initial b* value (b₁) immediately after curing of the coating film tended to be equivalent or lower than that of the Comparative Examples, whereas the b* value (b₂) on day 5 almost did not change from the initial value. It was also revealed that the multilayer coating films of Examples 6 to 12 showed a smaller change Δb in yellowish color over time than the multilayer coating films of Comparative Examples 7 to 12; that is, there was less fading of yellowish color over time.

**Table 3**

| | | 0 h (b₁) | Day 5 (b₂) | Δb (b₂-b₁) |
|---|---|---|---|---|
| Example | 6 | 4.6 | 3.9 | -0.7 |
| | 7 | 4.0 | 3.5 | -0.5 |
| | 8 | 4.3 | 3.8 | -0.5 |
| | 9 | 4.4 | 3.9 | -0.5 |
| | 10 | 4.0 | 3.9 | -0.1 |
| | 11 | 4.1 | 3.7 | -0.4 |
| | 12 | 4.1 | 3.7 | -0.4 |
| Comparative Example | 7 | 4.7 | 3.4 | -1.3 |
| | 8 | 4.7 | 3.5 | -1.2 |
| | 9 | 4.8 | 3.4 | -1.4 |
| | 10 | 4.6 | 3.3 | -1.3 |
| | 11 | 4.6 | 3.4 | -1.2 |
| | 12 | 5.1 | 3.5 | -1.6 |

## Claims

1. A clear coat paint composition comprising
(A) a carboxy-containing polymer,
(B) an epoxy-containing acrylic resin, and
(C) an antioxidant having a phenyl group and a sulfide bond.

2. The clear coat paint composition according to claim 1, wherein the amount of the antioxidant having a phenyl group and a sulfide bond (C) is 0.1 to 10 parts by mass, per 100 parts by mass of the solids content of the clear coat paint composition.

3. A method for forming a multilayer coating film, comprising the steps of:
(1) applying an aqueous base coat paint composition (X) to a substrate to form a base coat coating film;
(2) applying a clear coat paint composition (Y) to the uncured base coat coating surface to form a clear coat coating film; and
(3) heating the uncured base coat coating film and the uncured clear coat coating film to simultaneously cure the films;
the aqueous base coat paint composition (X) comprising an amine compound (x1), and the clear coat paint composition (Y) being the clear coat paint composition according to claim 1 or 2.

4. The method for forming a multilayer coating film according to claim 3, wherein the amine compound (x1) is a tertiary amine.
